Europäisches Patentamt

European Patent Office

Office européen des brevets

(19)

(11) Veröffentlichungsnummer : **0 117 277**
**B1**

(12) **EUROPÄISCHE PATENTSCHRIFT**

(45) Veröffentlichungstag der Patentschrift :
30.12.86

(51) Int. Cl.⁴ : **H 01 S 3/03**

(21) Anmeldenummer : **83109333.1**

(22) Anmeldetag : **20.09.83**

(54) **Gasdurchfluss-Laser.**

(30) Priorität : **15.02.83 DE 3305152**

(43) Veröffentlichungstag der Anmeldung :
**05.09.84 Patentblatt 84/36**

(45) Bekanntmachung des Hinweises auf die Patenterteilung : **30.12.86 Patentblatt 86/52**

(84) Benannte Vertragsstaaten :
**AT BE CH DE FR GB IT LI SE**

(56) Entgegenhaltungen :
**US-A- 3 596 202**
**US-A- 3 970 957**

(73) Patentinhaber : **Rofin-Sinar Laser GmbH**
**Berzeliusstrasse 87**
**D-2000 Hamburg 74 (DE)**

(72) Erfinder : **Martinen, Hinrich, Dipl.-Phys.**
**Lindenstrasse 6**
**D-2085 Quickborn (DE)**
Erfinder : **Simonsson, Samuel Sture, Dipl.-Ing.**
**Burgstrasse 6**
**D-2090 Winsen/Bahlburg (DE)**
Erfinder : **Wirth, Peter, Dr. Dipl.-Phys.**
**Birkengrund 1**
**D-2090 Winsen Ortsteil Ludorf (DE)**

(74) Vertreter : **Glawe, Delfs, Moll & Partner Patentanwälte**
**Rothenbaumchaussee 58 Postfach 2570**
**D-2000 Hamburg 13 (DE)**

## Beschreibung

Die Erfindung bezieht sich auf einen Gasdurchfluß-Laser insbesondere Laser mit transversalem oder schnellem axialen Gasdurchfluß, der einen den Resonator und eine Umwälzpumpe umfassenden Gaskreislauf und einen Nebenkreislauf zum ständigen Abzweigen, Aufbereiten und Wiederzuführen eines Teilgasstroms aufweist.

Es ist bekannt, daß das Arbeitsgas eines Gaslasers der ständigen Aufbereitung bedarf, weil sich in der Entladungsstrecke chemische Veränderungen ergeben, die zu Verunreinigungen und damit zu Veränderung der Laser-Eigenschaften und zu Verringerung des Wirkungsgrades führen. Bei einem $CO_2$-Laser, dessen Arbeitsgas überwiegend aus Helium und zu kleineren Teilen aus Kohlendioxyd und Stickstoff besteht, bilden sich insbesondere Kohlenmonoxyd, Sauerstoff und Stickoxyde. Ferner müssen Fremdstoffe ausgeschieden werden, die durch Systemundichtigkeit aus der umgebenden Atmosphäre eingesaugt sein können, insbesondere Wasserdampf. Es ist bekannt (GB-PS 1 449 056) aus dem den Resonator verlassenden Gas den wertvollen Heliumanteil abzutrennen und nach mengengerechter Beimischung von Kohlendioxyd und Stickstoff dem Resonator wieder zuzuführen. Dies ist jedoch sehr aufwendig. Es ist auch bekannt (GB-PS 1 256 398), im Hauptkreislauf Filter und Katalysatoren vorzusehen, die lediglich zur Entfernung der Verunreinigungen dienen. Abgesehen davon, daß die Bahandlung der gesamten Gasmenge im Hauptkreislauf nachteilig ist, ist die ständige Feststellung der Zusammensetzung des Arbeitsgases und die entsprechend proportionierte Zuführung unterschiedlicher Anteile von Frischgas sehr aufwendig. Beim Durchfluß großer Gasmengen begnügt man sich daher in manchen Fällen mit der Filterung des Gases und der Entfernung des Sauerstoffs, wobei man aber erhöhte Anteile von CO und $H_2$ im Arbeitsgas dulden muß (US-PS 4 316 157). Schließlich ist es bekannt (« Laserfocus » Dezember 1982, Seite 43) durch eine besondere Vakuumpumpe ständig einen Teil des Arbeitsgases in einen Nebenkreislauf abzuziehen, aufzubereiten, in den erforderlichen Mengenverhältnissen mit Frischgas zu mischen und an derselben Stelle in den Hauptgaskreislauf wieder zuzuführen. Zwar wird dabei der Aufbereitungsaufwand insofern verringert, als nicht ständig der gesamte Gasstrom durch die Aufbereitungseinrichtungen geführt werden muß ; jedoch ist der Aufwand für die Umwälzung des Gases im Nebenkreislauf und für die Zusammenführung mit Frischgas über mehrere Druckstufen sehr groß.

Der Erfindung liegt daher die Aufgabe zugrunde, einen Laser der eingangs genannten Art zu schaffen, der einfach im Aufbau und daher weniger aufwendig und störungsanfällig ist.

Die erfindungsgemäße Lösung besteht darin, daß der pumpenlos ausgebildete Nebenkreislauf vor und hinter der Umwälzpumpe an den Hauptkreislauf angeschlossen ist.

Dadurch wird die für den Betrieb des Nebenkreislaufs erforderliche Druckdifferenz von der ohnehin vorhandenen Umwälzpumpe des Hauptkreislaufs abgeleitet. Auf die gesonderte Zusammenführung des aufbereiteten Gases und des Frischgases wird verzichtet ; vielmehr wird unter der Annahme, daß die Zusammensetzung des aufbereiteten Gases sich nicht oder nur wenig ändert, auf eine besondere Zusammensetzungsmessung verzichtet und das Frischgas in stets gleicher Zusammensetzung zugeführt, wobei es auf den Ort der Zuführung des Frischgases nicht ankommt. Statt der Annahme unveränderter Gaszusammensetzung kann auch die Annahme treten, daß die Zusammensetzungsänderung des Gases stets konstant bleibt, wobei die stets konstante Zusammensetzung des Frischgases so gegenüber der im Gerät gewünschten Gaszusammensetzung verschoben ist, daß sie die Änderung ausgleicht.

Der in den Nebenkreislauf abgezogene Anteil des Gases kann weniger als 10 % betragen.

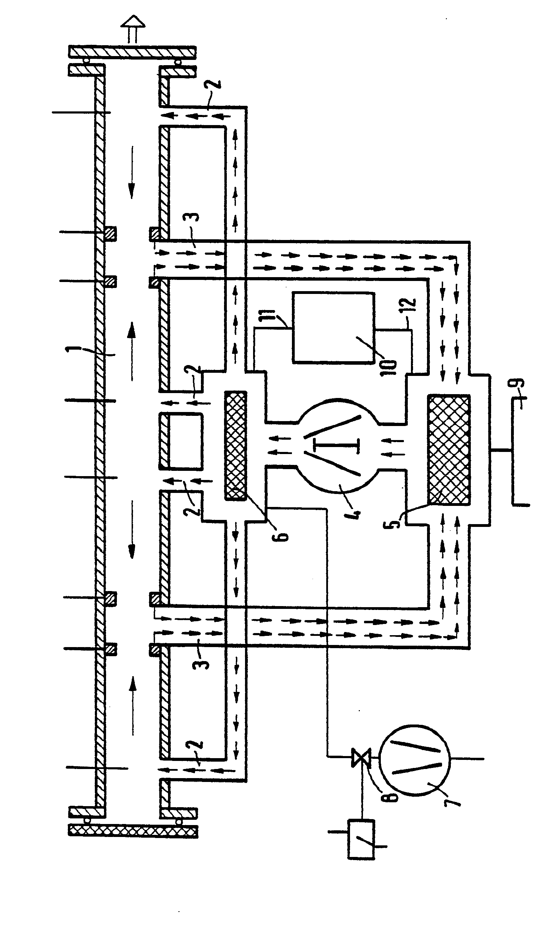

Ein Ausführungsbeispiel der Erfindung wird im folgenden näher unter Bezugnahme auf die Zeichnung erläutert, die in einer Fig. ein schematisches Schaltbild veranschaulicht.

Dem Resonator 1 wird das Arbeitsgas an mehreren Stellen über Leitungen 2 zugeführt und jeweils in der Mitte zwischen zwei Leitungszuführungen durch Leitungen 3 wieder entnommen. Der von dem Resonator und den Leitungen 2 und 3 gebildete Hauptkreislauf wird geschlossen durch die Umwälzpumpe 4. Dieser vor- und nachgeschaltet sind Wärmeaustauscher 5 und 6.

Der gewünschte Druck im Resonator wird aufrechterhalten durch eine Vakuumpumpe 7 mit Regelventil 8. Frischgas kann bei 9 zugeführt werden, wobei die Wahl einer Zufuhrstelle vor der Umwälzpumpe 4 eine gute Durchmischung des Frischgases mit dem Altgas vor der Zuführung zum Resonator sicherstellt.

Die Aufbereitungseinrichtungen für einen Teilgasstrom sind schematisch in dem Kasten 10 zusammengefaßt. Sie umfassen inbesondere ein Mengendosierventil, einen Oel- und Wasserfilter, eine beheizte Katalysatorstrecke, einen Partikelfilter und einen Durchflußmesser. Sie sind an den Hauptkreislauf über Leitungen 11 und 12 angeschlossen, und zwar unmittelbar an die Druck- bzw. Saugseite der Umwälzpumpe 4. Dadurch steht die gesamte Druckdifferenz der Umwälzpumpe für den Nebenkreislauf 10 zur Verfügung. Diese Druckdifferenz reicht insbesondere dann aus, wenn es sich um einen Laser mit schnellem Gasdurchfluß und entsprechend hoher Umwälzleistung und damit großer Druckdifferenz an der Umwälzpumpe 4 handelt. Diese Voraussetzung ist vornehmlich bei Lasern mit schnellem axialen Gasdurchfluß erfüllt.

**Patentanspruch**

Gasdurchfluß-Laser, insbesondere Laser mit transversalem oder schnellem axialen Gasdurchfluß, der einen den Resonator und eine Umwälz-pumpe umfassenden Gashauptkreislauf und ei-nen Nebenkreislauf zum ständigen Abzweigen, Aufbereiten und Wiederzuführen eines Teilgasstroms aufweist, dadurch gekennzeichnet, daß der pumpenlose Nebenkreislauf (10) vor und hinter der Umwälzpumpe (4) an den Hauptkreislauf (1, 2, 3, 4) angeschlossen ist.

**Claim**

A gas circulation laser, in particular a laser with a transverse or fast axial gas flow, which has a primary gas circuit comprising a resonator and a circulating pump, and a secondary circuit for the continuous tapping, treatment and re-supply of a part of. the gas stream, characterised in that the pumpless secondary circuit (10) is connected to the primary circuit (1, 2, 3, 4) upstream and downstream of the circulating pump (4).

**Revendication**

Laser à circulation de gaz, en particulier laser à circulation de gaz transversale ou axiale rapide, qui présente un circuit principal de gaz comprenant le résonateur et une pompe de circulation et un circuit secondaire pour la dérivation, le traitement et la réintroduction en continu d'un courant partiel de gaz, caractérisé en ce que le circuit secondaire (10) exempt de pompe est raccordé au circuit principal (1, 2, 3, 4) en amont et en aval de la pompe de circulation (4).